(19) **Europäisches Patentamt / European Patent Office / Office européen des brevets**

(11) **EP 1 794 423 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(21) Anmeldenummer: **05774021.9**

(22) Anmeldetag: **04.08.2005**

(51) Int Cl.:
**F01N 11/00** (2006.01)   **F02D 41/34** (2006.01)
**F02D 41/14** (2006.01)

(86) Internationale Anmeldenummer:
**PCT/EP2005/053853**

(87) Internationale Veröffentlichungsnummer:
**WO 2006/027299 (16.03.2006 Gazette 2006/11)**

(54) **VERFAHREN ZUR DIAGNOSE VON ZYLINDERBEZOGENEN EINZELKATALYSATOREN EINER OTTO-MEHRZYLINDER-BRENNKRAFTMASCHINE**

METHOD FOR DIAGNOSING CYLINDER-BASED INDIVIDUAL CATALYSTS OF A MULTI-CYLINDER SPARK IGNITED INTERNAL COMBUSTION ENGINE

PROCEDE DE DIAGNOSTIC DE CATALYSEURS INDIVIDUELS ASSOCIES AUX CYLINDRES DANS UN MOTEUR A COMBUSTION INTERNE MULTICYLINDRE A ALLUMAGE COMMANDE

(84) Benannte Vertragsstaaten:
**DE FR GB IT**

(30) Priorität: **08.09.2004 DE 102004043535**

(43) Veröffentlichungstag der Anmeldung:
**13.06.2007 Patentblatt 2007/24**

(73) Patentinhaber: **VDO Automotive AG**
**93055 Regensburg (DE)**

(72) Erfinder:
• **KETTERER, Alexander**
**93186 Pettendorf/Adlersberg (DE)**
• **RÖSEL, Gerd**
**93055 Regensburg (DE)**

(56) Entgegenhaltungen:
**DE-A1- 10 130 054**   **DE-A1- 19 630 940**
**DE-C1- 10 206 402**

• **PATENT ABSTRACTS OF JAPAN Bd. 1999, Nr. 12, 29. Oktober 1999 (1999-10-29) -& JP 11 200845 A (NISSAN MOTOR CO LTD), 27. Juli 1999 (1999-07-27)**
• **V. BASSHUYSEN, SCHÄFER: "Handbuch Verbrennungsmotor" 2003, VIEWEG VERLAG , WIESBADEN , XP002351673 ISBN: 3-528-13933-1 in der Anmeldung erwähnt Seiten 559-561 Seiten 568-569**

**Beschreibung**

Die vorliegende Erfindung betrifft ein Verfahren zur Diagnose von zylinderbezogenen Einzelkatalysatoren einer homogen betriebenen Otto-Mehrzylinder-Brennkraftmaschine.

Um die zur Zeit geltenden Bestimmungen der On-Board-Diagnose (OBD) erfüllen zu können, muss der Wirkungsgrad desjenigen Teils des Katalysatorsystems einer Brennkraftmaschine überprüft werden, der bei einer Wirkungsgradverschlechterung zum Überschreiten der korrelierenden OBD-Grenzwertemissionen führt. Für heute übliche Katalysatorkonfigurationen, bei denen für sämtliche Zylinder ein Hauptkatalysator und ein gemeinsamer Vorkatalysator vorgesehen sind, sind verschiedene Verfahren zum Erfassen der Konvertierungsrate der Katalysatoren bekannt, siehe beispielsweise "Handbuch Verbrennungsmotor", 2. Aufl., von Richard von Basshuysen/Fred Schäfer, S. 568, 569. Alle diese Verfahren nutzen die Sauerstoffspeicherfähigkeit (OSC = Oxygen Storage Capacity) des Katalysators aus. Aus der DE 196 30 940 C2 ist ein derartiges OSC-basiertes Diagnoseverfahren bekannt, bei dem während eines Diagnosezyklus die Parameter (Amplitude, Periode) der Zwangsanregung des Kraftstoff-Luft-Verhältnisses (Lambda) so eingestellt werden, dass sich eine maximale Sauerstoffbeladung des Katalysators ergibt. Das oszillierende Signal einer dem betreffenden Katalysator nachgeschalteten Lambda-Sonde (Nachkat-Sonde) wird dann dazu verwendet, ein Maß für die Fläche zu bestimmen, die von dem Mittelwert des Sondensignals und dem Sondensignal begrenzt wird. Dieses Maß wird dann mit einem entsprechenden Wert eines Grenz-katalysators verglichen, der maximal zulässig gealtert ist. Hieraus lässt sich dann der Katalysatorwirkungsgrad bestimmen.

Das Diagnoseverfahren gemäss der vorliegenden Erfindung betrifft eine z.B in JP 11-200 845 A beschriebene Katalysatorsystemkonfiguration, bei der den einzelnen Zylindern jeweils ein Einzelkatalysator zugeordnet und ggf. ein den Einzelkatalysatoren nachgeschalteter gemeinsamer Hauptkatalysator vorgesehen ist. Die Katalysatoren sind jeweils als 3-Wege-Katalysatoren ausgebildet, wobei die Einzelkatalysatoren eine vorgegebene, jedoch relativ geringe Sauerstoffspeicherfähigkeit haben. Die Einzelkatalysatoren sind möglichst nah an der Brennkraftmaschine angeordnet und können z.B. in Direktmontage in den jeweiligen Krümmern installiert sein, um ein möglichst kurzfristiges "Anspringen" der Einzelkatalysatoren zu erreichen. Zum Erfassen des Luft-Kraftstoff-Verhältnisses ist eine gemeinsame Lambda-Sonde vorgesehen, die stromab an oder nach der Zusammenführung der die Einzelkatalysatoren enthaltenden Abgasrohre angeordnet ist.

Bei diesem Katalysatorsystem wird eine zylinderbezogene Lambda-Regelung mit einer zylinderbezogenen Zwangsanregung vorgesehen, durch die einem stöchiometrischen Lambda-Sollwert eine periodische Schwankung in Form eines Lambda-Pulses zur Optimierung des Katalysatorwirkungsgrades überlagert wird.

Aus der DE 102 06 402 C1 ist bereits ein Verfahren für eine zylinderselektive Lambda-Regelung bekannt, bei dem das Signal einer Lambda-Sonde durch einen Mikrokontroller zyklenaufgelöst wird, so dass das Lambda-Signal den einzelnen Zylindern zugeordnet und somit einzelne Abgaspakete dieser Zylinder erfasst werden können.

Der vorliegenden Erfindung liegt die Aufgabe zugrunde, ein Verfahren zur Diagnose von zylinderbezogenen Einzelkatalysatoren einer homogen betriebenen Otto-Mehrzylinder-Brennkraftmaschine anzugeben, das eine Diagnose der Konvertierungsrate der Einzelkatalysatoren mit Hilfe des Signals einer den Einzelkatalysatoren nachgeschalteten gemeinsamen Lambda-Sonde erlaubt.

Die Erfindung sowie vorteilhafte Ausgestaltungen der Erfindung sind in den Ansprüchen definiert.

Für eine OSC-basierte Katalysatordiagnose ist es wichtig, dass vor der für die Diagnose erforderlichen Umstellung der Zwangsanregung eine definierte Sauerstoffbeladung des Katalysators eingestellt ist, um Durchbrüche des Katalysators nur in der einen oder in der anderen Richtung zu vermeiden.

Erfindungsgemäß ist daher vorgesehen, dass vor einer aktiven Katalysatordiagnose aus dem Signal der Lambdasonde (LS1) Zyklen aufgelöst zylinderbezogene Lambda-Signale (Vr) rekonstruiert werden und mit Hilfe dieser rekonstruierten Lambda-Signale (Vr) eine zylinderbezogene Trimmregelung für jeden der Einzelkatalysatoren (K1-K4) durchgeführt wird, wobei Signalabweichungen ($\Delta$Vr) von einem im Katalysatorfenster liegenden mittleren Referenzwert (Vref) als Regelabweichung dient.

Gemäß einem ersten Aspekt der Erfindung wird, falls mit dieser dynamischen Gemischtrimmung für die einzelnen Zylinder Signalabweichungen der rekonstruierten zylinderbezogenen Lambdasignale sowohl in über- wie auch unterstöchiometrischer Richtung nicht beseitigt werden können, wenn also kein stabiles mittleres Luft-Kraftstoff-Verhältnis erreicht werden kann, auf einen defekten Einzelkatalysator geschlossen. Der Defekt kann von einer alterungsbedingten starken Verringerung der Sauerstoffspeicherfähigkeit oder auch von einer starken mechanischen Beschädigung bzw. Zerstörung herrühren. Eine aktive Diagnose des betreffenden Einzelkatalysators ist dann nicht mehr erforderlich.

Durch die beschriebene zylinderbezogene Gemischtrimmung kann zwischen durch Gemischtoleranzen hervorgerufene Lambda-Abweichungen und einer tatsächlich reduzierten Sauerstoffspeicherfähigkeit des Einzelkatalysators und damit verbundenen Signalreaktionen über den gesamten Messbereich der nachgeschalteten Lambda-Sonde unterschieden werden. Ein unzulässiger Defekt der Einzelkatalysatoren kann, wie beschrieben, bereits durch die Gemischtrimmung festgestellt werden, ohne dass es einer gesonderten aktiven Katalysatordiagnose bedarf.

Ein weiterer Vorteil der beschriebenen zylinderbezogenen Gemischtrimmung besteht darin, dass durch die schnelle Erfassung und zyklenbezogene Filterung des Signals der nachgeschalteten Lambda-Sonde herkömmliche OSC-basierte Diagnoseverfahren anwendbar sind, wie im folgenden erläutert wird. Insbesondere kann durch die zyklenaufgelöste Auswertung des Signals der Lambda-Sonde ein Standard-Algorithmus für herkömmliche Diagnoseverfahren zum Bestimmen des Katalysatorwirkungsgrades mittels OSC-/Emissions-Korrelation verwendet werden, wie ebenfalls noch erläutert wird.

Gemäß einem zweiten Aspekt der Erfindung wird, wenn eine erfolgreiche dynamische Gemischtrimmung möglich ist und auch durchgeführt wurde, eine aktive Katalysatordiagnose durchgeführt, indem während eines Diagnosezyklus die Parameter der Zwangsanregung so eingestellt werden, dass die hierdurch hervorgerufene Sauerstoffbeladung der Einzelkatalysatoren mindestens so groß ist, dass bei einer Sauerstoffspeicherfähigkeit des betreffenden Einzelkatalysators entsprechend der eines Grenzkatalysators Signalabweichungen der rekonstruierten zylinderbezogenen Lambda-Signale sowohl in über- wie auch unterstöchiometrische Richtung auftreten, und während des Diagnosezyklus auftretende Signalabweichungen der rekonstruierten zylinderbezogenen Lambda-Signale zu einer OSC-basierten Diagnose der Einzelkatalysatoren verwendet werden.

Hierbei können die im Stand der Technik bekannten OSC-basierten Diagnoseverfahren zum Bestimmen der Konvertierungsrate der Einzelkatalysatoren verwendet werden, wie sie beispielsweise aus der oben genannten DE 196 30 940 C2 bekannt sind. Hierdurch wird die Möglichkeit geschaffen, dass während des Diagnosezyklus aus den Signalabweichungen der rekonstruierten zylinderbezogenen Lambda-Signale jedes Einzelkatalysators ein für eine OSC-basierte Katalysatordiagnose charakteristischer Wert gewonnen wird, der dann mit einem in einem Kennfeld gespeicherten spezifischen Wert des Grenzkatalysators verglichen wird, um für jeden Einzelkatalysator einen den Katalysatorwirkungsgrad darstellenden spezifischen Diagnosewert zu bestimmen.

Wenn bei einer aktiven Katalysatordiagnose der Bedarf einer Gemischtrimmung für einen Einzelkatalysator erkannt wird, hat die Beladung des betreffenden Einzelkatalysators nicht den für die Diagnose erforderlichen Referenzwert erreicht. Das Ergebnis der aktive Katalysatordiagnose wird dann verworfen, und die aktiven Katalysatordiagnose wird dann nach erfolgreicher erneuter Gemischtrimmung wieder gestartet.

Zweckmäßigerweise wird die Auswertung des Signals der Lambda-Sonde für die aktive Katalysatordiagnose erst nach einer Stabilisierungsphase durchgeführt, in der die Parameter der Zwangsanregung auf die für die Diagnose erforderlichen Werte umgestellt werden und in der sich das Signal der Lambda-Sonde stabilisieren kann. Hierdurch werden Streuungen des Signals der Lambda-Sonde aus vorausgegangenen Störungen durch Instationärvorgänge verringert. Auch andere destabilisierende Faktoren wie die Gaslaufzeit zwischen Kraftstoffeinspritzung und Lambda-Sonde werden damit ausgeschaltet.

Das Verfahren für die aktive Katalysatordiagnose hat den Vorteil, dass durch die Umschaltung der Parameter der Zwangsanregung die kleinen Einzelkatalysatoren mit geringen OSC-Differenzen zwischen einem zulässigen und einem unzulässigen Wert bezüglich des Emissionsgrenzwertes diagnostiziert werden können. Durch die kontrollierte Sauerstoffbeladung der Einzelkatalysatoren während einer Stabilisierungsphase können Toleranzen für die Diagnose der geringen OSC-Differenzen der betreffenden Einzelkatalysatoren minimiert werden.

Um auch für Einzelkatalysatoren mit reduziertem Wirkungsgrad eine optimale Emissionsreduzierung und auch die Möglichkeit einer dynamischen Gemischtrimmung für die Einzelkatalysatoren zu ermöglichen, wird gemäß einem dritten Aspekt der Erfindung vorgesehen, dass die Parameter der Gemischregelung und Zwangsanregung für den normalen Betrieb der Brennkraftmaschine an die bei der aktiven Katalysatordiagnose ermittelten Diagnosewerte für die Einzelkatalysatoren angepasst werden, um die Sauerstoffbeladung der Einzelkatalysatoren an ihren Alterungszustand anzupassen. Zweckmäßigerweise werden die Parameter der Zwangsanregung auch für die aktive Katalysatordiagnose an die bei einer vorherigen aktiven Katalysatordiagnose ermittelten Diagnosewerte für die Einzelkatalysatoren angepasst, um eine unnötig hohe Sauerstoffbeladung der Einzelkatalysatoren zu vermeiden.

Gemäß dem dritten Aspekt der vorliegenden Erfindung kann somit die Sauerstoffbeladung der Einzelkatalysatoren an ihren Alterungszustand angepasst werden. Durch adaptive Anpassung der entsprechenden Regelparameter verringert sich somit der Anstieg der Schadstoffemissionen im Normalbetrieb wie auch bei der aktiven Katalysatordiagnose über der Lebensdauer.

Anhand der Zeichnungen werden weitere Einzelheiten des erfindungsgemäßen Verfahrens erläutert. Es zeigt:

Fig. 1    ein schematisches Diagramm einer Katalysatorsystemkonfiguration für die Abgasnachbehandlung an einer 4-Zylinder-Brennkraftmaschine;

Fig. 2    einen Lambda-Puls einer Zwangsanregung für den Normalbetrieb der Brennkraftmaschine;

Fig. 3    einen Lambda-Puls der Zwangsanregung für eine aktive Katalysatordiagnose;

Fig. 4    ein Diagramm mit einem Lambda-Puls für eine aktive Katalysatordiagnose sowie mit drei unterschiedlichen Verläufen eines rekonstruierten zylinderbezogenen Lambda-Signals für einen Zylinder.

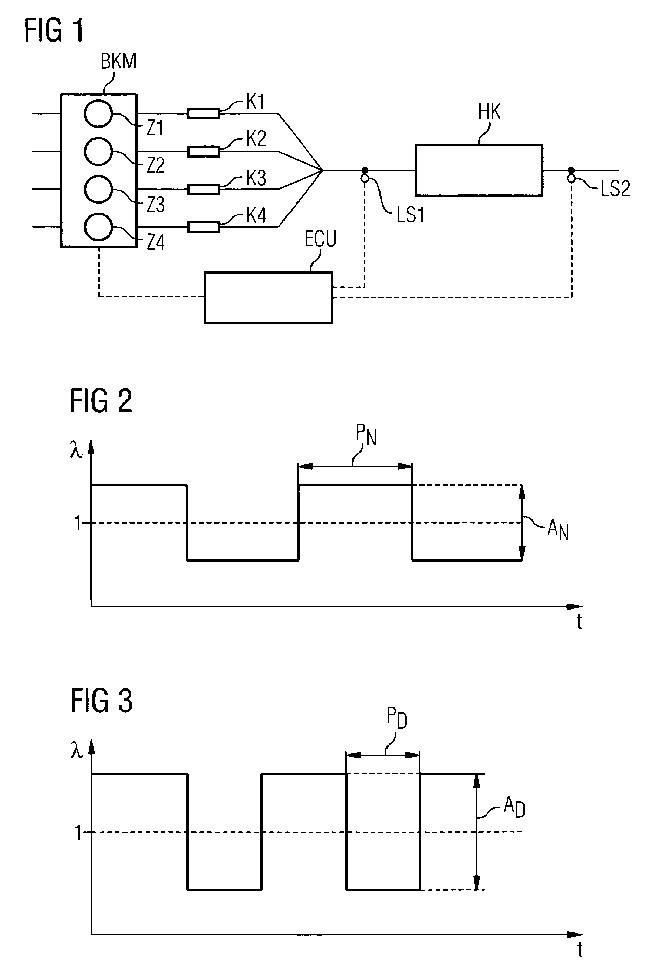

Fig. 1 zeigt in schematischer Weise ein Beispiel einer Katalysatorsystemkonfiguration für eine 4-Zylinder-Otto-Brennkraftmaschine BKM mit vier Zylindern Z1-Z4, zylinderbezogenen Einzelkatalysatoren K1-K4 und ggf. einem den Einzelkatalysatoren K1 - K4 nachgeschalteten Hauptkatalysator HK. Die Einzelkatalysatoren und der Hauptkatalysator sind als 3-Wege-Katalysator ausgebildet, wobei die Einzelkatalysatoren eine vorgegebene relativ kleine Sauerstoffspeicherfähigkeit (OSC) haben.

Zwischen den Einzelkatalysatoren K1-K4 und dem Hauptkatalysator HK ist im gemeinsamen Abgastrakt eine Lambda-Sonde LS1 angeordnet, deren Signal einem elektronischen Betriebssteuergerät ECU zugeführt wird. Die Lambda-Sonde LS1 kann für das nachfolgend beschriebene Verfahren zur Diagnose der Konvertierungsrate der Einzelkatalysatoren K1-K4 sowohl als stetige Sonde wie auch als binäre Sonde (Sprungsonde) ausgebildet sein. Ferner ist dem Hauptkatalysator HK eine weitere Lambda-Sonde LS2 nachgeschaltet, die jedoch für das Diagnoseverfahren nicht erforderlich ist.

Das elektronische Betriebssteuergerät ECU führt eine Gemischregelung in Form einer zylinderbezogenen Lambda-Regelung mit einer zylinderbezogenen Zwangsanregung durch. Bekanntlich wird durch die Zwangsanregung einem stöchiometrischen Lambda-Sollwert eine periodische Schwankung in Form eines Lambda-Pulses zur Optimierung des Katalysatorwirkungsgrades überlagert.

Durch den Betrieb der Einzelkatalysatoren K1 bis K4 kommt es aufgrund ihrer kleinen Sauerstoffspeicherfähigkeit und der erforderlichen Zwangsanregung zu einer für diese Systemkonfiguration typischen Restsauerstoffkonzentration, die durch die nachgeschaltete Lambda-Sonde LS1 erfasst werden kann. Bei dem nun zu beschreibenden Diagnoseverfahren kann durch Auswerten des Signalverlaufs der Lambda-Sonde LS1 auf den Wirkungsgrad der Einzelkatalysatoren K1-K4 geschlossen werden.

Gemäß dem ersten Aspekt der vorliegenden Erfindung wird vor einer aktiven Katalysatordiagnose eine dynamische Gemischtrimmung für alle Zylinder Z1-Z4 durchgeführt. Dies ist erforderlich, da vor dem Beginn der Diagnose eine definierte, für die Diagnose erforderliche mittlere Sauerstoffbeladung der Einzelkatalysatoren eingestellt werden muss. Diese zylinderbezogene dynamische Gemischtrimmung für die Einzelkatalysatoren K1-K4 wird, kurz gesagt, wie folgt durchgeführt.

Wie bereits erwähnt, ist für die Einzelkatalysatoren K1-K4 eine zylinderbezogene Zwangsanregung vorgesehen, die einem stöchiometrischen mittleren Lambda ($\lambda=1$) ein periodisch schwankender Lambda-Puls mit einer Amplitude A und einer Periode P überlagert ($A_N$ und $P_N$ für den Normalbetrieb, siehe Fig. 2). Die zylinderbezogene Zwangsanregung der Einzelkatalysatoren K1-K4 wird an ihre Sauerstoffspeicherfähigkeit so angepasst, dass am Ende jeder Magergemisch-Halbwelle eine vorgegebene Ziel-Sauerstoffbeladung der Einzelkatalysatoren erreicht wird.

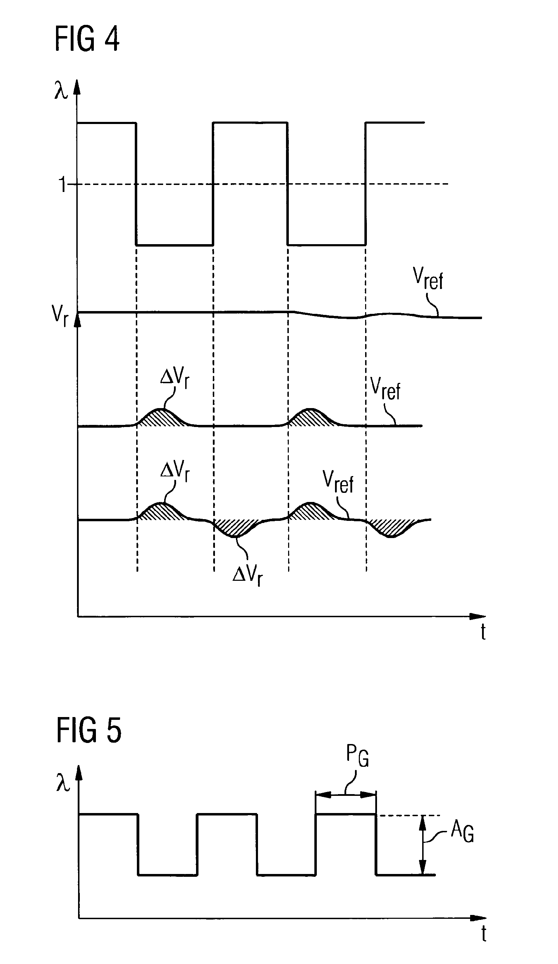

Die Signalerfassung für die Gemischtrimmung erfolgt zyklenaufgelöst aus den Modellgrößen der zylinderselektiven Lambda-Regelung. Dementsprechend werden aus dem Signal der Lambda-Sonde LS1 zyklenaufgelöst zylinderbezogene Lambda-Signale rekonstruiert, so dass sich für jeden Zylinder mit zugeordnetem Einzelkatalysator ein entsprechendes zylinderbezogenes Lambda-Signal Vr ergibt, wie dies im unteren Teil der Fig. 4 für einen der Zylinder Z1-Z4 dargestellt ist.

Aus konstanten Verläufen der zylinderbezogenen Lambda-Signale Vr über alle Zylinder Z1-Z4 wird ein mittlerer Referenzwert Vref für die Sauerstoffbeladung der Einzelkatalysatoren gewonnen, der das Maß für das Katalysatorfenster darstellt. Die konstanten Signalverläufe ergeben sich aufgrund der Sauerstoffspeicherfähigkeit der Einzelkatalysatoren. Treten Signalabweichungen $\Delta$Vr der zylinderbezogenen Lambda-Signale Vr von dem mittleren Referenzwert Vref auf, so rühren diese von fetten bzw. mageren Gemischstörungen her. Die Signalabweichungen lösen eine Trimmreaktion einer entsprechenden Trimmregelung aus, um diese Signalabweichungen zu beseitigen.

Zur Veranschaulichung sei auf den unteren Teil des Bildes 4 verwiesen. Die oberste Kurve des rekonstruierten zylinderbezogenen Lambda-Signals Vr hat einen konstanten Verlauf entsprechend dem mittleren Referenzwert Vref. Die Tatsache, dass keine Signalabweichungen vorhanden sind, bedeutet, dass es im Einzelkatalysator des betreffenden Zylinders zu keinen Fettgemisch- oder Magergemisch-Durchbrüchen kommt, so dass kein Trimmbedarf besteht. Hieraus kann geschlossen werden, dass der betreffende Einzelkatalysator eine ausreichende Sauerstoffspeicherfähigkeit und somit eine zufriedenstellende Konvertierungsrate hat; der Einzelkatalysator ist somit in Ordnung.

Das in der Mitte liegende rekonstruierte zylinderbezogene Lambda-Signal Vr zeigt Signalabweichungen $\Delta$Vr nur in einer Richtung, und zwar im dargestellten Beispiel in überstöchiometrischer bzw. Magergemisch-Richtung. Lassen sich diese Signalabweichungen $\Delta$Vr durch die oben beschriebene Trimmregelung beseitigen, so kann ebenfalls daraus geschlossen werden, dass der betreffende Einzelkatalysator in Ordnung ist.

Wenn dagegen Signalabweichungen $\Delta$Vr in beiden Richtungen auftreten, wie dies das untere rekonstruierte zylinderbezogene Signal in Fig. 4 zeigt, so lassen sich diese Signalabweichungen durch die beschriebene Trimmregelung nicht mehr beseitigen. Das bedeutet, dass der betreffende Einzelkatalysator sowohl Fettgemisch- wie auch Magergemisch-Durchbrüche zeigt, da seine Sauerstoffspeicherfähigkeit einen unzulässig niedrigen Wert hat. Seine Konvertierungsrate ist daher so schlecht, dass die durch die Bestimmungen der On-Board-Diagnose (OBD) vorgegebenen Grenzwertemissionen überschritten werden.

Der betreffende Einzelkatalysator ist daher als defekt zu beurteilen, ohne dass es einer weiteren aktiven Katalysatordiagnose bedarf.

Gemäss dem zweiten Aspekt der vorliegenden Erfindung wird eine aktive Katalysatordiagnose während eines Diagnosezyklus durchgeführt, wenn eine erfolgreiche Gemischtrimmung möglich ist und durchgeführt wurde, wie dies vorstehend erläutert wurde. Bei der aktiven Katalysatordiagnose kann auf OSC-basierte Diagnoseverfahren zurückgegriffen werden, wie sie beispielsweise aus der bereits genannten DE 196 30 940 C2 bekannt sind.

Zu Beginn der Diagnose werden die Parameter $A_D$, $P_D$ der Zwangsanregung so eingestellt, dass dies zu einer maximalen Sauerstoffbeladung des Katalysators führt. Die maximale Sauerstoffbeladung des betreffenden Einzelkatalysators wird hierbei so gewählt, dass der Einzelkatalysator durch die aufgeprägte Sauerstoffbeladung für einen Grenzkatalysator die verbliebene Restsauerstoffspeicherfähigkeit so überschreitet, dass die nachgeschaltete Lambda-Sonde LS1 den nicht speicherfähigen Sauerstoffanteil des Abgases messen kann. Üblicherweise erfolgt die Umschaltung der Zwangsanregung in der Weise, dass die Amplitude A der Zwangsanregung entsprechend vergrößert wird, wie dies in Fig. 3 beispielhaft dargestellt ist.

Zur Durchführung der aktiven Katalysatordiagnose wird wiederum aus dem Signal der Lambda-Sonde LS1 zyklenaufgelöst rekonstruierte zylinderbezogene Lambda-Signale Vr gebildet, wie dies im unteren Teil der Fig. 4 veranschaulicht ist. Wenn das rekonstruierte zylinderbezogene Signal Vr einen konstanten Verlauf hat und somit keine Signalabweichungen ΔVr auftreten, wie dies die obere Kurve für Vr in Fig. 4 zeigt, so kann daraus geschlossen werden, dass der Katalysator in Ordnung ist.

Treten dagegen Signalabweichungen ΔVr in beiden Richtung auf (siehe die untere Kurve in Fig. 4), so hängt die Größe dieser Signalabweichungen vom Wirkungsgrad des betreffenden Einzelkatalysators ab. Mittels eines herkömmlichen OSC-basierten Diagnoseverfahrens, wie es aus der DE 196 30 940 C2 bekannt ist, lässt sich dann das Maß der Sauerstoffbeladung des zu diagnostizierenden Einzelkatalysators berechnen. Hierbei wird, kurz gesagt, so vorgegangen, dass ein Maß für die Fläche bestimmt wird, die von dem mittleren Referenzwert Vref und den Signalabweichungen ΔVr während des Diagnosezyklus begrenzt wird. Dieses Maß wird dann mit einem in einem Kennfeld abgelegten Referenzwert eines Grenzkatalysators verglichen, dessen Sauerstoffspeicherfähigkeit "grenzwertig" ist. Durch diesen Vergleich lässt sich dann bestimmen, ob und wie stark der Wirkungsgrad des betreffenden Einzelkatalysators zurückgegangen ist. Auf diese Weise kann für jeden Einzelkatalysator ein spezifischer Katalysatordiagnosewert bestimmt werden.

Wenn während einer aktiven Diagnose festgestellt wird, dass ein Bedarf einer Gemischtrimmung für den betreffenden Einzelkatalysator besteht (siehe die mittlere Kurve für das rekonstruierte zylinderbezogene Lambda-Signal Vr in Fig. 4), so wird das Ergebnis der aktiven Katalysatordiagnose verworfen. Es wird dann eine erneute Trimmregelung durchgeführt. Wenn diese zur Beseitigung der entsprechenden Signalabweichungen ΔVr geführt hat, wird die aktive Katalysatordiagnose erneut gestartet.

Zweckmäßigerweise wird eine Signalauswertung bei der aktiven Katalysatordiagnose erst nach einer Stabilisierungsphase durchgeführt, in der die Parameter $A_D$, $P_D$ der Zwangsanregung auf die für die Diagnose erforderlichen Werte umgestellt werden und in der sich das Signal der Lambda-Sonde LS1 stabilisieren kann. Hierdurch lassen sich Streuungen des Signals der Lambda-Sonde LS1 aus vorausgegangenen Störungen durch Instationärvorgänge verringern. Außerdem werden hierdurch weitere das Diagnoseergebnis beeinflussende Vorgänge wie die Gaslaufzeit zwischen Kraftstoffeinspritzung und Signalerzeugung berücksichtigt. Hierbei wird vorzugsweise so vorgegangen, dass die Umstellung der Parameter $A_D$, $P_D$ der Zwangsanregung allmählich, beispielsweise über eine "Stabilisierungsrampe", erfolgt.

Gemäss einem dritten Aspekt der vorliegenden Erfindung werden die Parameter für die Gemischregelung und der damit verbundenen Zwangsanregung für den normalen Betrieb der Brennkraftmaschine an den bei einer vorhergehenden aktiven Katalysatordiagnose ermittelten Diagnosewert angepasst, um die Sauerstoffbeladung der Einzelkatalysatoren K1-K4 an den Alterungszustand anzupassen. Hierdurch wird eine optimale Emissionsreduzierung auch durch Einzelkatalysatoren mit verringertem Wirkungsgrad ermöglicht. Außerdem kann dann auch für derartige wirkungsgradreduzierte Einzelkatalysatoren eine erfolgreiche zylinderbezogene Gemischtrimmung durchgeführt werden. Eine entsprechend angepasste Zwangsanregung mit verringerter Amplitude $A_G$ und verringerter Periode $P_G$ ist beispielhaft in Fig. 5 dargestellt. Die Änderung der Parameter der Zwangsanregung lässt sich durch Faktoren beispielsweise wie folgt bestimmen:

$$P_G = P_N \times f \text{ (Katalysatorwirkungsgrad)}$$

$$A_G = A_N \times f \text{ (Katalysatorwirkungsgrad)} \, ,$$

worin $A_N$, $P_N$ die Parameter für den Normalbetrieb und $A_G$, $P_G$ die Parameter für einen gealterten Katalysator sind.

Eine entsprechende "Alterungsadaption" kann auch für die aktive Katalysatordiagnose erfolgen. Auch in diesem Fall ist es zweckmäßig, die durch die Zwangsanregung aufgeprägte Sauerstoffbeladung des zu diagnostizierenden Einzelkatalysators über die Lebensdauer des Katalysatorsystem an den Katalysatorwirkungsgrad anzupassen, um eine unnötig hohe Sauerstoffbeladung während des Diagnosezyklus zu vermeiden.

Zweckmäßigerweise erfolgt die Alterungsadaption der Parameter der Zwangsanregung für sämtliche Zylinder einer Zylinderbank gemeinsam und in der gleichen Weise, um zu vermeiden, dass es durch unterschiedliche Sauerstoffbeladungen der Einzelkatalysatoren zu ungleichen Drehmomentbeiträgen der betreffenden Zylinder kommt.

Wird durch die Alterungsadaption die durch die Zwangsanregung aufgeprägte Sauerstoffbeladung der Einzelkatalysatoren soweit reduziert, dass die Zwangsanregung auch abgeschaltet werden kann, da die Sauerstoffspeicherfähigkeit des betreffenden Einzelkatalysators zu klein geworden ist, ist der betreffende Einzelkatalysator als defekt zu beurteilen.

**Patentansprüche**

1. Verfahren zur Diagnose von zylinderbezogenen Einzelkatalysatoren (K1-K4) einer homogen betriebenen Otto-Mehrzylinder-Brennkraftmaschine (BKM) mittels einer gemeinsamen Lambda-Sonde (LS1), die stromab an oder nach der Zusammenführung der die Einzelkatalysatoren (K1-K4) enthaltenden Abgasrohre angeordnet ist, welche zylinderbezogenen Einzelkatalysatoren als 3-Wege-Katalysatoren ausgebildet sind und jeweils eine vorgegebene, relativ kleine Sauerstoffspeicherfähigkeit (OSC) haben, und welches Verfahren eine zylinderbezogene Lambda-Regelung mit einer zylinderbezogenen Zwangsanregung umfasst,
   **dadurch gekennzeichnet,**
   **dass** vor einer aktiven Katalysatordiagnose aus dem Signal der Lambdasonde (LS1) Zyklen aufgelöst zylinderbezogene Lambda-Signale (Vr) rekonstruiert werden und mit Hilfe dieser rekonstruierten Lambda-Signale (Vr) eine zylinderbezogene Trimmregelung für jeden der Einzelkatalysatoren (K1-K4) durchgeführt wird, wobei Signalabweichungen (ΔVr) von einem im Katalysatorfenster liegenden mittleren Referenzwert (Vref) als Regelabweichung dient, und
   **dass** auf einen defekten Einzelkatalysator (K1-K4) geschlossen wird, wenn eine erfolgreiche Gemischtrimmung nicht möglich ist, weil Signalabweichungen (ΔVr) sowohl in über- wie auch unterstöchiometrische Richtung durch die Trimmregelung nicht beseitigt werden können.

2. Verfahren nach Anspruch 1,
   **dadurch gekennzeichnet,**
   **dass** nach erfolgreicher Durchführung einer dynamischen Gemischtrimmung eine aktive Katalysatordiagnose durchgeführt wird, indem während eines Diagnosezyklus
   die Parameter ($A_D$, $P_D$) der Zwangsanregung so eingestellt werden, dass die hierdurch hervorgerufene Sauerstoffbeladung der Einzelkatalysatoren (K1-K4) mindestens so groß ist, dass bei einer Sauerstoffspeicherfähigkeit des betreffenden Einzelkatalysators entsprechend der eines Grenzkatalysators Signalabweichungen (ΔVr) der rekonstruierten zylinderbezogenen Lambda-Signale (Vr) sowohl in über- wie auch unterstöchiometrische Richtung auftreten, und
   während des Diagnosezyklus auftretende Signalabweichungen (ΔVr) der rekonstruierten zylinderbezogenen Lambda-Signale (Vr) zu einer OSC-basierten Diagnose der Einzelkatalysatoren (K1-K4) verwendet werden.

3. Verfahren nach Anspruch 2,
   **dadurch gekennzeichnet, dass** während des Diagnosezyklus aus den Signalabweichungen (ΔVr) der rekonstruierten zylinderbezogenen Lambda-Signale (Vr) jedes Einzelkatalysators (K1-K4) ein für eine OSC-basierte Katalysatordiagnose charakteristischer Wert gewonnen wird, der dann mit einem in einem Kennfeld gespeicherten spezifischen Wert des Grenzkatalysators verglichen wird, um für jeden Einzelkatalysator (K1-K4) einen den Katalysatorwirkungsgrad darstellenden spezifischen Diagnosewert zu bestimmen.

4. Verfahren nach Anspruch 2 oder 3,
   **dadurch gekennzeichnet,**
   **dass**, wenn bei einer aktiven Katalysatordiagnose der Bedarf einer Gemischtrimmung für einen Einzelkatalysator (K1-K4) erkannt wird, das Ergebnis der aktiven Katalysatordiagnose verworfen und die aktive Katalysatordiagnose nach einer erneuten und erfolgreichen Gemischtrimmung wieder gestartet wird.

5. Verfahren nach einem der Ansprüche 2 bis 4,

**dadurch gekennzeichnet,**
**dass** eine Auswertung des Signals der Lambda-Sonde (LS1) für eine aktive Katalysatordiagnose erst nach einer Stabilisierungsphase durchgeführt wird, in der die Parameter ($A_D$, $P_D$) der Zwangsanregung auf die für die Katalysatordiagnose erforderlichen Werte umgestellt werden und in der sich das Signal der Lambdasonde (LS1) stabilisieren kann.

6. Verfahren nach Anspruch 5,
**dadurch gekennzeichnet,**
**dass** die Umstellung der Parameter ($A_D$, $P_D$) der Zwangsanregung für eine aktive Katalysatordiagnose allmählich erfolgt.

7. Verfahren nach einem der vorhergehenden Ansprüche in Verbindung mit Anspruch 3,
**dadurch gekennzeichnet,**
**dass** die Parameter der Gemischregelung und Zwangsanregung für den normalen Betrieb der Brennkraftmaschine (BKM) an die bei der aktiven Katalysatordiagnose ermittelten Diagnosewerte für die Einzelkatalysatoren (K1-K4) angepasst werden, um die Sauerstoffbeladung der Einzelkatalysatoren (K1-K4) an ihren Alterungszustand anzupassen.

8. Verfahren nach einem der vorhergehenden Ansprüche in Verbindung mit Anspruch 3,
**dadurch gekennzeichnet,**
**dass** die Parameter der Zwangsanregung für die aktive Katalysatordiagnose an die bei einer vorherigen aktiven Katalysatordiagnose ermittelten Diagnosewerte für die Einzelkatalysatoren angepasst werden, um eine unnötig hohe Sauerstoffbeladung der Einzelkatalysatoren (K1-K4) zu vermeiden.

9. Verfahren nach Anspruch 7 oder 8,
**dadurch gekennzeichnet,**
**dass** die Anpassung der Parameter für sämtliche Zylinder einer Zylinderbank gemeinsam erfolgt.

**Claims**

1. Method for diagnosing cylinder-associated individual catalytic converters (K1-K4) of a homogeneously operated multi-cylinder Otto cycle internal combustion engine (BKM) by means of a common lambda probe (LS1) positioned downstream at or after the convergence of the exhaust gas pipes containing the individual catalytic converters (K1-K4), said cylinder-associated individual catalytic converters being embodied as 3-way catalytic converters and each having a predefined, relatively small oxygen storage capacity (OSC), and said method incorporating cylinder-associated lambda adjustment with cylinder-associated forced activation,
**characterised in that**
prior to an active catalytic converter diagnosis, cylinder-associated lambda signals (Vr) are reconstructed from the signal of the lambda probe (LS1) on a cycle-resolved basis, and with the aid of said reconstructed lambda signals (Vr) cylinder-associated trimming adjustment is performed for each of the individual catalytic converters (K1-K4), with signal deviations ($\Delta$Vr) from a mean reference value (Vref) lying within the catalytic converter window being used as the control deviation, and
that an individual catalytic converter (K1-K4) is diagnosed as defective if successful mixture trimming is not possible because signal deviations ($\Delta$Vr) in both the over- and under-stoichiometric direction cannot be eliminated by the trimming adjustment.

2. Method according to claim 1,
**characterised in that**
after dynamic mixture trimming has been successfully carried out, an active catalytic converter diagnosis is performed by setting the forced activation parameters ($A_D$, $P_D$) during a diagnostic cycle in such a way that the thereby caused oxygen charge of the individual catalytic converters (K1-K4) is at least so high that if the oxygen storage capacity of the relevant individual catalytic converter corresponds to that of a threshold catalytic converter, signal deviations ($\Delta$Vr) of the reconstructed cylinder-associated lambda signals (Vr) occur in both the over- and under-stoichiometric direction, and
signal deviations ($\Delta$Vr) of the reconstructed cylinder-associated lambda signals (Vr) occurring during the diagnostic cycle are used for OSC-based diagnosis of the individual catalytic converters (K1-K4).

3. Method according to claim 2,
**characterised in that** during the diagnostic cycle a characteristic value for an OSC-based catalytic converter diagnosis is obtained from the signal deviations (ΔVr) of the reconstructed cylinder-associated lambda signals (Vr) of each individual catalytic converter (K1-K4), said value then being compared with a specific threshold catalytic converter value stored in an engine map in order to determine for each individual catalytic converter (K1-K4) a specific diagnostic value representing the catalytic converter efficiency.

4. Method according to claim 2 or 3,
**characterised in that**
if, during an active catalytic converter diagnosis, the need for mixture trimming for an individual catalytic converter (K1-K4) is identified, the result of the active catalytic converter diagnosis is discarded and the active catalytic converter diagnosis is restarted after a successful mixture re-trimming.

5. Method according to one of claims 2 to 4,
**characterised in that**
an analysis of the signal of the lambda probe (LS1) for an active catalytic converter diagnosis is not performed until after a stabilisation phase in which the forced activation parameters ($A_D$, $P_D$) are converted to the values required for catalytic converter diagnostics and in which the signal of the lambda probe (LS1) can stabilise.

6. Method according to claim 5,
**characterised in that**
the conversion of the forced activation parameters ($A_D$, $P_D$) for an active catalytic converter diagnosis takes place gradually.

7. Method according to one of the preceding claims in conjunction with claim 3,
**characterised in that**
the mixture adjustment and forced activation parameters for normal operation of the internal combustion engine (BKM) are adjusted to the diagnostic values for the individual catalytic converters (K1-K4) determined during the active catalytic converter diagnosis in order to adjust the oxygen charge of the individual catalytic converters (K1-K4) to their state of ageing.

8. Method according to one of the preceding claims in conjunction with claim 3,
**characterised in that**
the forced activation parameters for the active catalytic converter diagnosis are adjusted to the diagnostic values for the individual catalytic converters determined during a previous active catalytic converter diagnosis in order to avoid an unnecessarily high oxygen charge of the individual catalytic converters (K1-K4).

9. Method according to claim 7 or 8,
**characterised in that**
the parameters are adjusted jointly for all the cylinders of a cylinder bank.

**Revendications**

1. Procédé de diagnostic de catalyseurs individuels associés aux cylindres (K1 à K4) d'un moteur a combustion interne multicylindre à allumage commandé en régime homogène (BKM), au moyen d'une sonde lambda commune (LS1) disposée en aval dans la jonction des tuyaux d'échappement contenant les catalyseurs individuels (K1 à K4) ou après cette jonction, ces catalyseurs individuels associés aux cylindres étant configurés en catalyseurs à trois voies et présentant chacun une capacité de stockage de l'oxygène (OSC) prédéterminée et relativement faible, ce procédé comprenant une régulation lambda associée aux cylindres avec une excitation forcée associée aux cylindres,
**caractérisé en ce que** des signaux lambda associés aux cylindres (Vr) et résolus par cycle sont reconstitués, avant un diagnostic de catalyseurs actif, à partir du signal de la sonde lambda (LS1), et un réglage d'équilibrage associé aux cylindres est effectué pour chacun des catalyseurs individuels (K1 à K4) à l'aide de ces signaux lambda reconstitués (Vr), des déviations de signal (ΔVr) par rapport à une valeur de référence moyenne (Vref) située dans la fenêtre du catalyseur servant d'écart de réglage, et
qu'on conclut à un catalyseur individuel (K1 à K4) défectueux lorsqu'un équilibrage de mélange ne peut pas réussir car des déviations de signal (ΔVr) dans le sens sur-stoechiométrique ainsi que sous-stoechiométrique ne peuvent pas être supprimées par le réglage d'équilibrage.

**2.** Procédé selon la revendication 1, **caractérisé en ce qu'**un diagnostic de catalyseurs actif est effectué après un équilibrage de mélange dynamique réussi,

en ajustant, au cours d'un cycle de diagnostic, les paramètres ($A_D$, $P_D$) de l'excitation forcée de telle sorte que la charge en oxygène des catalyseurs individuels (K1 à K4) provoquée est au moins aussi grande que des déviations de signal ($\Delta Vr$) des signaux lambda reconstituts (Vr) associés aux cylindres se produisent dans le sens sur-stoechiométrique ainsi que sous-stoechiométrique si la capacité de stockage de l'oxygène du catalyseur individuel concerné correspond à celle d'un catalyseur limite, et

en utilisant les déviations de signal ($\Delta Vr$) des signaux lambda reconstitués (Vr) associés aux cylindres apparaissant au cours du cycle de diagnostic, pour effectuer un diagnostic des catalyseurs individuels (K1 à K4) basé sur une OSC.

**3.** Procédé selon la revendication 2, **caractérisé en ce qu'**une valeur caractéristique d'un diagnostic de catalyseurs basé sur une OSC est obtenue au cours du cycle de diagnostic à partir des déviations de signal ($\Delta Vr$) des signaux lambda reconstitués (Vr) associés aux cylindres de chaque catalyseur individuel (K1 à K4), cette valeur étant ensuite comparée à une valeur de référence spécifique du catalyseur limite enregistrée dans un champ caractéristique afin de déterminer, pour chaque catalyseur individuel (K1 à K4), une valeur diagnostique spécifique représentant le rendement du catalyseur.

**4.** Procédé selon la revendication 2 ou 3, **caractérisé en ce que** le résultat d'un diagnostic de catalyseurs actif est supprimé, et que le diagnostic de catalyseurs actif est recommencé après un nouvel équilibrage réussi de mélange, lorsque le besoin d'un équilibrage de mélange est reconnu pour un catalyseur individuel (K1 à K4) au cours d'un diagnostic de catalyseurs actif.

**5.** Procédé selon l'une des revendications 2 à 4, **caractérisé en ce que** l'évaluation du signal de la sonde lambda (LS1) pour un diagnostic de catalyseurs actif n'est effectuée qu'après une phase de stabilisation au cours de laquelle les paramètres ($A_D$, $P_D$) de l'excitation forcée sont adaptés aux valeurs requises pour le diagnostic de catalyseurs, et au cours de laquelle le signal de la sonde lambda (LS1) peut se stabiliser.

**6.** Procédé selon la revendication 5, **caractérisé en ce que**, pour un diagnostic de catalyseurs actif, l'adaptation des paramètres ($A_D$, $P_D$) de l'excitation forcée est effectuée progressivement.

**7.** Procédé selon l'une des revendications précédentes en combinaison avec la revendication 3, **caractérisé en ce que** les paramètres de la correction du mélange et de l'excitation forcée dans le régime normal du moteur à combustion interne (BKM) sont adaptés aux valeurs de diagnostic des catalyseurs individuels (K1 à K4) déterminées lors du diagnostic de catalyseurs actif afin d'adapter la charge en oxygène des catalyseurs individuels (K1 à K4) à leur état de vieillissement.

**8.** Procédé selon l'une des revendications précédentes en combinaison avec la revendication 3, **caractérisé en ce que** les paramètres de l'excitation forcée pour le diagnostic de catalyseurs actif sont adaptés aux valeurs de diagnostic des catalyseurs individuels déterminées lors d'un diagnostic de catalyseurs actif afin d'éviter une charge en oxygène inutilement élevée des catalyseurs individuels (K1 à K4).

**9.** Procédé selon la revendication 7 ou 8, **caractérisé en ce que** l'adaptation des paramètres est effectuée simultanément pour tous les cylindres.

FIG 1

FIG 2

FIG 3

FIG 4

FIG 5

**EP 1 794 423 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19630940 C2
- JP 11200845 A

- DE 10206402 C1